# EUROPÄISCHE PATENTSCHRIFT

(11) **EP 2 906 839 B1**
(45) Veröffentlichungstag und Bekanntmachung des Hinweises auf die Patenterteilung: **01.06.2022**
(21) Anmeldenummer: 13777257.0
(22) Anmeldetag: 10.10.2013
(51) Int. Cl.: F16B 37/12, F16L 55/11, B29C 49/20

(54) **BAUTEIL MIT DICHTSTOPFEN SOWIE VERFAHREN ZUM EINFORMEN EINES BAUTEILEINSATZES**
COMPONENT WITH SEALING PLUG AND METHOD FOR THE INSERT MOULDING OF A COMPONENT INSERT
COMPOSANT AVEC BOUCHON D'ÉTANCHÉITÉ ET PROCÉDÉ DE MOULAGE D'UN INSERT DE COMPOSANT

(30) Priorität: 10.10.2012 DE 102012019849
(43) Veröffentlichungstag der Anmeldung: 19.08.2015
(73) Patentinhaber: Böllhoff Verbindungstechnik GmbH, 33649 Bielefeld (DE)
(72) Erfinder: STUMPF, Michael, 33611 Bielefeld (DE); THOMMES, Holger, 54558 Strohn (DE)
(74) Vertreter: Heyer, Volker
(86) Internationale Anmeldenummer: PCT/EP2013/071144
(87) Internationale Veröffentlichungsnummer: WO 2014/057027

(56) Entgegenhaltungen:
- WO-A1-01/17711
- WO-A1-88/05873
- WO-A1-2009/000317
- DE-A1-102009 048 160
- DE-U- 7 329 838
- DE-U1- 29 809 635
- DE-U1-202010 012 368
- DE-U1-212009 000 058
- US-A- 3 525 365
- US-A- 4 679 362
- US-A- 4 788 022
- US-A1- 2008 166 204

## Beschreibung

### 1. Gebiet der Erfindung

Vorliegende Erfindung betrifft einen Bauteileinsatz mit einem Dichtstopfen, der in mindestens ein fließfähiges, aushärtbares Material oder in ein mit diesem tränkbaren Fasermaterial einformbar ist. Des Weiteren betrifft vorliegende Erfindung ein Verfahren zum Einformen des Bauteileinsatzes in das mindestens eine fließfähige aushärtbare Material oder in ein mit diesem tränkbares Fasermaterial.

### 2. Hintergrund der Erfindung

In der Konstruktionstechnik werden unterschiedlichste Bauteile aus fließfähigen, aushärtbaren Materialien hergestellt. Zu diesen fließfähigen, aushärtbaren Materialien zählen beispielsweise Kunstharze, Kunststoffe oder Metalle, wie beispielsweise niedrigschmelzende metallische Gusslegierungen. Zudem ist es bekannt, Fasermaterialien mit derartigen fließfähigen, aushärtbaren Materialien, wie beispielsweise Kunstharze, Leime oder Klebstoffe, zu tränken und auszuhärten, um auf diese Weise einen Faserverbundwerkstoff herzustellen.

Da auf diese Weise hergestellte Bauteile mit anderen Bauteilen verbunden oder daran weitere Teile befestigt werden müssen, ist es erforderlich, eine Öffnung mit Gewinde in den Bauteilen vorzusehen. Da hier jedoch das Bauteilmaterial häufig eine geringere Festigkeit aufweist als das Material eines einzuschraubenden Gewindebolzens, können derartige Gewindeöffnungen oder Verbindungsöffnungen leicht beschädigt werden. Um solche Beschädigungen zu vermeiden, werden Bauteileinsätze, wie beispielsweise Gewindeeinsätze in Form von Gewindebuchsen oder auch Drahtgewindeeinsätze bekannter Bauart, in derartige Öffnungen eingesetzt.

Bei der Nutzung von Drahtgewindeeinsätzen oder vollwandigen Gewindeeinsätzen mit Wanddurchbrechungen oder Durchgangsbohrungen muss natürlich vermieden werden, dass das flüssige, aushärtbare Material in das Innere des Drahtgewindeeinsatzes eindringt. Daher schlägt DE 10 14 938 vor, den Querschnitt der aneinander anliegenden Windungen des Drahtgewindeeinsatzes derart zu profilieren, dass sie eine formschlüssige und auf diese Weise abdichtende Verbindung in Form einer Drahtgewindebuchse bilden. Drahtgewindeeinsätze mit dieser Formgestaltung sind aufwendig und somit teuer in ihrer Herstellung. Im Gegensatz dazu schlägt CH 251 484 vor, einen Drahtgewindeeinsatz an seiner radialen Außenseite mit einer abdichtenden Schicht zu versehen. Diese Schicht soll vermeiden, dass ein flüssiges Material in das Innere des Drahtgewindeeinsatzes gelangt.

EP 1 046 446 B1 beschreibt ein Verfahren, bei dem ein wendelförmig gewickelter Draht unter axialer Kompression in flüssiges Metall eingeformt wird. Die axiale Kompression hat das Ziel, dass die aneinander angrenzenden Windungen der Drahtwendel abdichtend aneinander anliegen. Erst wenn dieser Zustand erreicht ist, wird flüssiges Metall in die Umgebung der Drahtwendel transportiert, so dass entsprechend des Formhohlraums ein Metallteil ausgeformt werden kann. Da selbst bei mit geringen Toleranzen hergestellten Drahtwendeln von einer gewissen Undichtigkeit in deren komprimierten Wendeln auszugehen ist, ist das hier beschriebene Verfahren mit einer hohen Ausschussrate verbunden.

DE 690 09 297 T2 beschreibt eine Mutternplatte, die mit Hilfe eines Fixationsstifts auf einer Bauteiloberfläche aufgeklebt wird. Der Fixationsstift besitzt zwei sich gegenüberliegende Montageenden, die ein Auffädeln der Mutternplatte mit Auskleidungsmuffe und -mutter auf den Fixationsstift erleichtern. Der Fixationsstift weist zwei radial aufgeweitete Bereiche auf, zwischen denen ein radial verjüngter Bereich angeordnet ist. Durch Anordnung der Mutter zwischen den radial aufgeweiteten Bereichen wird das Innere der Mutter gegen das Eindringen von Klebstoff abgedichtet. Nach dem Aufbringen von Klebstoff wird mit Hilfe des Fixationsstifts die gesamte Mutternbaugruppe gegen die Befestigungsoberfläche gezogen, bis der Klebstoff ausgehärtet ist. Danach kann der Fixationsstift aus der Mutter entfernt werden, indem er entgegen der Einsetzrichtung aus der Mutter an seinem Montageende herausgezogen wird. Dabei wird einer der radial aufgeweiteten Bereiche überwunden. Ein derartiger Fixationsstift eignet sich aufgrund seiner Konstruktion und den hier offenbarten Verfahren lediglich zum Befestigen von Baugruppen auf einer Oberfläche.

Ein Expansionsstopfen und insbesondere ein ausdehnbarer Stopfen, der zum Verschließen und Abdichten von Bohrungen und Öffnungen in hydraulischen und pneumatischen Gehäusen verwendet werden soll, ist in US 3,525,365 beschrieben. Der Expansionsstopfen besitzt nur zwei Elemente, nämlich ein Expansionsteil und ein Verriegelungsglied, die zusammen gesetzt in die abzudichtende Bohrung oder sonstige Öffnung eingesteckt und dann von der Einsatzstelle aus zum Erzielen der gewünschten Expansion betätigt werden.

Weiterhin beschreibt US 4,788,022 eine wasserdichte Mutter, die beispielsweise in einem Wasserspeichertank verwendet werden kann. Die wasserdichte Mutter besteht aus einem metallischen Mutter-Körper, dessen Außenumfang mit einer Kunstharzschicht beschichtet ist, die auch die Vorder- und Rückseite des Mutter-Körpers bedeckt. Die Harzschicht, die die Rückseite des Mutter-Körpers bedeckt, umfasst einen kappenförmigen Abschnitt zum Aufnehmen des freien Endes eines Bolzens, der so in den Mutter-Körper eingeschraubt ist, dass das freie Ende von der Rückseite des Mutter-Körpers vorsteht, wodurch verhindert wird, dass Wasser in den Mutter-Körper eindringt.

US 4,679,362 A beschreibt Gegenstände und ein Verfahren, die nützlich sind, um einen Hubeinsatz für ein gegossenes Betonprodukt bereitzustellen. Die Gegenstände umfassen einen gewindelosen Stopfen zum vorübergehenden Einsetzen in einen Einsatz zum Aufnehmen einer Hebevorrichtung in einem gegossenen Betonprodukt, ein Einsetzwerkzeug dafür und die Einsatzbaugruppe. Der gewindelose Stopfen ist durch ein elastomeres rohrförmiges Element gekennzeichnet, das an jedem Ende Verschluss- und/oder Anschlagmittel aufweist und so bemessen ist, dass in seiner Betriebsposition in dem Hubeinsatz der Abschnitt des rohrförmigen Elements zwischen den Enden unter Spannung gesetzt ist, um das Eindringen von Beton in die Oberseite der Spule oder des Einsatzes und zwischen dem Hohlstopfen und der Spule während des Gießens positiv abzudichten. Das Werkzeug und das Verfahren beinhalten das seitliche Einführen eines abgeflachten und dann gefalteten unteren Abschnitts des gewindelosen röhrenförmigen Stopfens in ein röhrenförmiges Werkzeugelement, das Einführen des Stopfens und des Werkzeugelements in Längsrichtung in die Oberseite eines zylindrischen Hubeinsatzes, das Längsstrecken des Stopfens durch Reibeingriff mit dem rohrförmigen Werkzeugelement und den gleichzeitigen Eingriff des oberen Anschlagmittels mit dem Hubeinsatz, während das Werkzeugelement aus dem Einsatz herausgezogen wird, und das kompressive Befestigen des unteren Anschlagmittels in überlagerndem innigen Kontakt mit dem unteren Ende des Einsatzes bei vollständigem Zurückziehen, um den Zwischenabschnitt des Stopfens zwischen den Anschlagmitteln unter Spannung anzuordnen.

Es ist die Aufgabe vorliegender Erfindung, eine Vorrichtung und ein Verfahren bereitzustellen, mit denen ein Bauteileinsatz in fließfähigem, aushärtbarem Material oder in einem mit diesem tränkbaren Fasermaterial einformbar ist, ohne dass eine in dem Bauteileinsatz vorhandene Öffnung oder beispielsweise ein Innengewinde durch das fließfähige, aushärtbare Material beschädigt wird.

### 3. Zusammenfassung der Erfindung

Die obige Aufgabe wird durch einen Bauteileinsatz mit einem Dichtstopfen gemäß dem unabhängigen Patentanspruch 1 gelöst. Des Weiteren offenbart vorliegende Erfindung ein Verfahren zum Einformen eines Bauteileinsatzes mit einem derartigen Dichtstopfen in mindestens ein fließfähiges, aushärtbares Material oder in ein mit diesem tränkbares Fasermaterial im unabhängigen Patentanspruch 9. Vorteilhafte Ausgestaltungen und Vorteile vorliegender Erfindung ergeben sich aus der folgenden Beschreibung, den Zeichnungen sowie den anhängenden Ansprüchen.

Der erfindungsgemäße Bauteileinsatz, der ein Drahtgewindeeinsatz oder ein Gewindeeinsatz mit Durchgangsbohrung und/oder durchbrochenen Seitenwänden und/oder Mantelöffnungen ist, umfasst einen Dichtstopfen, so dass der Bauteileinsatz mit Dichtstopfen in mindestens ein fließfähiges, aushärtbares Material oder in ein mit diesem tränkbares Fasermaterial einformbar ist, wobei eine Innenseite des Bauteileinsatzes von dem Material freihaltbar ist. Um diesen Zweck zu erfüllen, weist der Dichtstopfen die folgenden Merkmale auf: einen zylinderähnlichen, insbesondere zylindrischen, hohlzylindrischen, konischen oder kegelstumpfähnlichen, Dichtkörper mit einer radialen Außenseite, die an die Innenseite des Bauteileinsatzes anpassbar oder angepasst ist, wobei der Dichtstopfen mindestens eine entfernbare Montagehilfe an einem geschlossenen Ende des Dichtkörpers aufweist, so dass der Dichtstopfen mit vorauseilender Montagehilfe in den Bauteileinsatz einsetzbar ist.

Vorliegende Erfindung umfasst bekannte Bauteileinsätze, die mit einem erfindungsgemäßen Dichtstopfen kombiniert werden. Zu diesen Bauteileinsätzen gehören Drahtgewindeeinsätze oder Gewindeeinsätze aus massivem Material. Die Bauteileinsätze zeichnen sich dadurch aus, dass eine Durchgangsbohrung und/oder durchbrochene Seitenwände und/oder eine Mantelöffnung aufweisen, die sich bei einem Einformvorgang in ein aushärtbares Material oder in eine Materialkombination mit diesem aushärtbaren Material füllen könnten. Da ein derartiges Füllen der Öffnungen im Bauteileinsatz von Nachteil wäre, verhindert der Dichtstopfen, dass das fließfähige, aushärtbare Material die Innenseite des Bauteileinsatzes erreicht.

Um beispielsweise bei radial durchbrochenen Gewindeeinsätzen aus massivem Material oder ähnlichen Bauteilen und in gleicher Weise bei Drahtgewindeeinsätzen zu verhindern, dass das fließfähige aushärtbare Material in das Innere des Bauteileinsatzes eindringt, wird der zylinderähnliche Dichtkörper des Dichtstopfens in den Innenraum des Bauteileinsatzes mit Hilfe der Montagehilfe eingesetzt. Da der zylinderähnliche Dichtkörper in seiner Form bevorzugt an die innere Öffnung des Bauteileinsatzes angepasst ist, legt sich die radiale Außenseite des zylinderähnlichen Dichtkörpers aufgrund seiner Elastizität selbständig an der radialen Innenseite des Bauteileinsatzes an. Sollte sich der Dichtkörper nicht selbständig an der Innenseite des Bauteileinsatzes anlegen, ist es alternativ ebenfalls bevorzugt, den Dichtkörper innerhalb des Bauteileinsatzes auszudehnen. Dies erfolgt beispielsweise mit Hilfe eines Kernstifts und seiner äußeren Formgestaltung, der im Inneren des Dichtkörpers angeordnet wird. Eine weitere Alternative besteht darin, den Dichtkörper durch ein Medium aufzuweiten, wie beispielsweise Luft, um ihn auf diese Weise an die Innenseite des Bauteileinsatzes zu drücken. Dieses Medium wird gemäß einer Ausführungsform über den Kernstift in den Dichtkörper des Dichtstopfens eingeleitet. Aufgrund der Anlage des Dichtstopfens an der Innenseite des Bauteileinsatzes erfolgt eine Abdichtung des Inneren des Bauteileinsatzes gegen das möglicherweise von außen eindringende fließfähige, aushärtbare Material.

Der Dichtstopfen zeichnet sich weiterhin durch seine entfernbare Montagehilfe aus, mit deren Hilfe man den Dichtkörper in das Innere des Bauteileinsatzes ziehen kann. Damit die Montagehilfe die Herstellung des Bauteils mit Bauteileinsatz nicht behindert, ist sie von dem Dichtkörper, und somit von dem gesamten Dichtstopfen, entfernbar. Es ist ebenfalls bevorzugt, die Montagehilfe am Dichtkörper zu belassen, sofern sie in das umgebende Material des Bauteileinsatzes oder Drahtgewindeeinsatzes einformbar ist.

Gemäß einer bevorzugten Ausführungsform vorliegender Erfindung umfasst der Dichtkörper an dem der Montagehilfe abgewandten Ende eine radial umlaufende Dichtlippe und/oder eine stirnseitige Dichtfläche. Während das Ende des Dichtkörpers angrenzend an die Montagehilfe geschlossen ist, stellt die an dem gegenüberliegenden Ende des Dichtstopfens angeordnete Dichtlippe oder die stirnseitige Dichtfläche sicher, dass nicht von dieser Seite fließfähiges, aushärtbares Material in das Innere des Bauteileinsatzes gelangen kann. Eine stirnseitige Dichtfläche lässt sich beispielsweise durch einen Dichtkörper in Form eines Vollzylinders realisieren. Es ist des Weiteren denkbar, den Dichtkörper auch als Kegelstumpf bereitzustellen. In Ergänzung dazu oder bei Bereitstellung des Dichtstopfens als Hohlkörper wird bevorzugt das eine Ende des Dichtkörpers mit der radial umlaufenden Dichtlippe versehen. Diese Dichtlippe steht radial auswärts vom Dichtkörper vor und legt sich vorzugsweise am Ende des Bauteileinsatzes an diesen an. Auf diese Weise wird ebenfalls eine Dichtfunktion für den Bereich zwischen Innenseite des Dichtkörpers und Dichtstopfen realisiert.

Gemäß einer bevorzugten Ausführungsform vorliegender Erfindung weist die Montagehilfe die Form eines stab- oder zapfenförmigen Fortsatzes auf. Dieser erstreckt sich in axialer Richtung des Dichtkörpers und ist, bezogen auf die Symmetrieachse des Dichtkörpers, außermittig angeordnet. Eine derartige Konstruktion ist gerade dann von Vorteil, wenn der einzuformende Drahtgewindeeinsatz einen radial nach innen ragenden Zapfen aufweist. Dieser Zapfen blockiert zum Teil die untere Durchgangsöffnung des Drahtgewindeeinsatzes, so dass sich nur ein außermittig angeordneter Steg oder Zapfen als Montagehilfe durch diese teilweise blockierte Öffnung hindurch fädeln lässt. Mit der Montagehilfe wird wiederum sichergestellt, dass der Dichtstopfen einen festen Sitz innerhalb des Bauteileinsatzes oder Drahtgewindeeinsatzes aufweist und auch das Innere des Bauteileinsatzes, bezogen auf die Länge des Bauteileinsatzes, vollständig ausfüllt. Natürlich ist es in gleicher Weise bevorzugt, die Montagehilfe mittig und somit in Fortsetzung der Symmetrieachse des Dichtkörpers anzuordnen.

Gemäß einer weiteren bevorzugten Ausführungsform weist die Montagehilfe eine Verjüngung benachbart zum Dichtkörper auf, so dass die Montagehilfe vom Dichtkörper entfernbar ist.

Es wurde bereits oben erwähnt, dass die Montagehilfe eine verlässliche Positionierung des Dichtstopfens im Inneren des Bauteileinsatzes gewährleistet. Um jedoch durch die Montagehilfe nicht das Einformen des Bauteileinsatzes und die Qualität des herzustellenden Konstruktionsteils zu mindern, wird vorzugsweise die Montagehilfe vor dem Einformvorgang vom Dichtstopfen entfernt. Zu diesem Zweck weist die Montagehilfe eine Sollbruchstelle oder Trennstelle auf, die das Entfernen der Montagehilfe vom Dichtstopfen unterstützt. Diese Trennstelle stellt beispielsweise eine Verjüngung der Montagehilfe dar, so dass durch eine ausreichende Zugkraft in axialer Richtung der Montagehilfe diese vom Dichtstopfen lösbar ist. Es ist ebenfalls bevorzugt, die Montagehilfe vom Dichtstopfen abzudrehen. Zu diesem Zweck kann die Montagehilfe vorzugsweise Einschnitte aufweisen, an denen sich die Montagehilfe vom Dichtkörper löst.

Gemäß einer weiteren bevorzugten Ausgestaltung vorliegender Erfindung weist der Dichtkörper eine hohlzylindrische Form auf, in der eine innere Öffnung an einen Kernstift einer Form anpassbar ist, so dass der hohlzylindrische Dichtkörper über den Kernstift in der inneren Öffnung des Bauteileinsatzes radial ausweitbar ist.

Gemäß einer weiteren bevorzugten Ausgestaltung vorliegender Erfindung ist der Dichtkörper in seiner axialen Richtung mindestens so lang wie der Bauteileinsatz. Im Speziellen ist der Dichtkörper bevorzugt an die Tiefe der inneren Öffnung des Bauteileinsatzes angepasst, so dass der Dichtkörper nach dem Einsetzen im Bauteileinsatz die gesamte innere Oberfläche des Bauteileinsatzes abdeckt und somit gegen das Eindringen des aushärtbaren, fließfähigen Materials verschließt. In diesem Zusammenhang ist es ebenfalls bevorzugt, den Dichtstopfen länger auszubilden als den Bauteileinsatz. Auf diese Weise wird sichergestellt, dass die vollständige innere Oberfläche des Bauteileinsatzes mit dem Dichtkörper abgedeckt wird, so dass kein fließfähiges, aushärtbares Material in das Innere des Bauteileinsatzes eindringen kann.

Gemäß vorliegender Erfindung ist der Bauteileinsatz ein Drahtgewindeeinsatz oder ein Gewindeeinsatz mit Durchgangsbohrung und/oder durchbrochenen Seitenwänden und/oder Mantelöffnungen. Der Drahtgewindeeinsatz ist gemäß einer Ausführungsform vorliegender Erfindung als Drahtbuchse ausgebildet. In diesem Fall sind die Wendeln der Drahtbuchse aneinanderanliegend gewickelt, um eine weitestgehend geschlossene radiale Außenwand zu bilden. Zudem sind derart aneinander anliegend gewickelte Wendeln der Drahtbuchse bevorzugt in der Geometrie eines Normgewindes gewickelt. Auf dieser Grundlage können andere Gewindeelemente, wie beispielweise Schrauben, direkt in die Drahtbuchse eingeschraubt werden. Zudem ist es nicht erforderlich, dass der Drahtgewindeeinsatz in ein vorgeformtes Gewinde eingepasst wird, um dann erst die passende Gewindeform anzunehmen und mit männlichen Gewindeelementen kombinierbar zu sein.

Es ist zudem bevorzugt, dass die radiale Außenseite des Dichtkörpers elastisch an das Innengewinde des Drahtgewindeeinsatzes oder des Gewindeeinsatzes anpassbar ist oder dass die radiale Außenseite des Dichtkörpers eine strukturierte Form umfasst die an das Innengewinde des Bauteileinsatzes angepasst ist.

In diesem Zusammenhang ist es weiterhin bevorzugt, die radiale Außenseite des Dichtkörpers beispielsweise mit einem zur radialen Innenseite des Drahtgewindeeinsatzes oder des Gewindeeinsatzes passenden Gewinde auszustatten, so dass Dichtkörper und Drahtgewindeeinsatz bzw. Gewindeeinsatz eine formschlüssige Verbindung eingehen. In gleicher Weise ist es ebenfalls bevorzugt, die äußere Oberfläche des Dichtkörpers mit einer radial vorspringenden Struktur auszustatten, die eine abdichtende Anlage an der Innenseite des Bauteileinsatzes realisiert.

Gemäß einer weiteren bevorzugten Ausgestaltung vorliegender Erfindung umfasst der Dichtstopfen nur eine Montagehilfe. Gemäß einer weiteren bevorzugten Ausführungsform weist der Dichtkörper ergänzend zur ersten Montagehilfe eine zweite Montagehilfe auf, die sich in axialer Richtung gegenüberliegend zur ersten Montagehilfe vom Dichtkörper erstreckt. Bei der Verwendung der ersten und zweiten Montagehilfe in Kombination ist es bevorzugt, während des Einbaus des Dichtstopfens in den Bauteileinsatz die erste Montagehilfe und die zweite Montagehilfe in entgegengesetzte Richtungen unter Zugspannung zu setzen, und dann den Dichtstopfen in den Bauteileinsatz einzubauen. Aufgrund der entgegengesetzten Zugspannungen an erster und zweiter Montagehilfe wird der Dichtkörper in seiner axialen Richtung gestreckt und somit auch radial verjüngt. Dies erleichtert ein Einsetzen in die innere Öffnung des Bauteileinsatzes. Sobald der Dichtkörper seine gewünschte Position erreicht hat, werden die erste Montagehilfe und die zweite Montagehilfe entlastet, und der Dichtkörper dehnt sich in radialer Richtung aus.

Vorliegende Beschreibung erläutert zudem den bereits oben diskutierten Dichtstopfen zum Einsatz in einen Bauteileinsatz. Dieser Dichtstopfen weist die folgenden Merkmale auf: einen zylinderähnlichen Dichtkörper mit einer radialen Außenseite, die an eine radiale Innenseite des Bauteileinsatzes anpassbar ist, wobei der Dichtstopfen eine entfernbare Montagehilfe an einem geschlossenen Ende des Dichtkörpers aufweist, so dass der Dichtstopfen mit vorauseilender Montagehilfe in den Bauteileinsatz einsetzbar ist.

Zudem offenbart vorliegende Erfindung ein Verfahren zum Einformen eines Bauteileinsatzes in mindestens ein fließfähiges, aushärtbares Material oder in ein mit diesem getränktes Fasermaterial. Der Bauteileinsatz ist ein Drahtgewindeeinsatz oder ein Gewindeeinsatz mit Durchgangsbohrung und/oder durchbrochenen Seitenwänden und/oder Mantelöffnungen. Das erfindungsgemäße Verfahren weist die folgenden Schritte auf: Verschließen des Bauteileinsatzes mit einem Dichtstopfen bestehend aus einem zylinderähnliche, insbesondere zylindrischen, hohlzylindrischen, konischen oder kegelstumpfähnlichen, Dichtkörper mit einer radialen Außenseite, die an eine Innenseite des Bauteileinsatzes anpassbar oder angepasst ist, und mindestens einer entfernbaren Montagehilfe an einem geschlossenen Ende des Dichtkörpers durch Einsetzen des Dichtkörpers mit vorauseilender Montagehilfe in den Bauteileinsatz, Halten des verschlossenen Bauteileinsatzes mit Dichtstopfen an einer vorbestimmten Stelle, zumindest teilweises Umgeben des Bauteileinsatzes mit Dichtstopfen mit dem fließfähigen, aushärtbaren Material oder mit einem mit diesem getränkten Fasermaterial und Aushärten des Materials und Entfernen des Dichtstopfens aus dem Bauteileinsatz.

Gemäß weiterer bevorzugter Ausgestaltungen des vorliegenden Verfahrens wird der Bauteileinsatz mit oder ohne Dichtstopfen zunächst an einer vorbestimmten Stelle positioniert. Sollte der Bauteileinsatz ohne Dichtstopfen positioniert worden sein, wird nachfolgend der Dichtstopfen im Bauteileinsatz installiert. Sofern der Bauteileinsatz bereits in einer Form oder ähnlichem positioniert worden ist, wird der Bauteileinsatz nun mit Dichtstopfen an der vorbestimmten Stelle gehalten. Es ist ebenfalls bevorzugt, den Bauteileinsatz außerhalb einer Form oder entfernt vom Ort der weiteren Verarbeitung mit dem Dichtstopfen zu versehen. Danach wird dann der Bauteileinsatz mit Dichtstopfen am Ort der weiteren Verarbeitung an vorbestimmter Stelle positioniert und gehalten.

Gemäß einer weiteren bevorzugten Ausgestaltung des Verfahrens wird der Bauteileinsatz mit Dichtstopfen mit oder ohne Montagehilfe eingeformt. Somit wird gemäß einer Verfahrensalternative die Montagehilfe vor dem Einformen des Bauteileinsatzes entfernt. Sollte es der Bauraum und das herzustellende Bauteil zulassen, ist es ebenfalls bevorzugt, die Montagehilfe am Dichtkörper zu belassen. Gleiches gilt bevorzugt auch bei der Verwendung von zwei Montagehilfen. Da die zweite Montagehilfe bevorzugt an der offenen Seite des Bauteileinsatzes angeordnet ist, muss die zweite Montagehilfe nicht vom Dichtkörper entfernt werden, sondern kann zum späteren Entfernen des Dichtstopfens aus dem Bauteileinsatz verwendet werden.

Im Rahmen dieses Verfahrens ist es bevorzugt, den Dichtstopfen mit einem innen hohl ausgebildeten, vorzugsweise hohlzylindrischen, Dichtkörper vorzusehen. Aufgrund dieser hohlen Form des Dichtkörpers ist der Dichtstopfen mit Bauteileinsatz auf einem Kernstift positionierbar und dort haltbar, während er in das ihn umgebende Material eingeformt wird. Durch das Aufstecken des Dichtkörpers auf den Kernstift wird der Dichtkörper in radialer Richtung aufgeweitet. Diese radiale Aufweitung führt dazu, dass der Dichtkörper an der Innenseite des Bauteileinsatzes anliegt und somit ein Eindringen des fließfähigen, aushärtbaren Materials in das Innere des Bauteileinsatzes verhindert. Zu diesem Zweck weist der Kernstift vorzugsweise eine an das Innere des Bauteileinsatzes angepasste Form auf, um den Dichtstopfen passend aufzuweiten. Gemäß einer anderen Ausführungsform ist es bevorzugt, den innen hohl ausgebildeten Dichtkörper über den Kernstift radial aufzuweiten, indem über den Kernstift Luft oder ein anderes Medium in das Innere des Dichtkörpers transportiert wird. Dieses zugeführte Medium weitet den Dichtkörper radial auf, so dass ebenfalls der Dichtkörper an der Innenseite des Bauteileinsatzes dichtend anliegt.

### 4. Kurze Beschreibung der begleitenden Zeichnungen

Die vorliegende Erfindung wurde unter Bezugnahme auf die begleitende Zeichnung näher erläutert. Es zeigen:
- Fig. 1: eine bevorzugte Ausführungsform des Dichtstopfens,
- Fig. 2: eine Schnittdarstellung des Dichtstopfens aus Fig. 1,
- Fig. 3: eine Schnittdarstellung einer weiteren bevorzugten Ausführungsform eines Dichtstopfens,
- Fig. 4: eine weitere bevorzugte Ausführungsform des Dichtstopfens,
- Fig. 5: eine Schnittdarstellung einer bevorzugten Ausführungsform des Dichtstopfens aus Fig. 1 in Kombination mit einem Drahtgewindeeinsatz,
- Fig. 6: eine bevorzugte Ausführungsform einer Kombination des Dichtstopfens mit einem Bauteileinsatz,
- Fig. 7: schematische Veranschaulichung des Einführens eines erfindungsgemäß bevorzugten Kernstifts in den Dichtstopfen mit Drahtgewindeeinsatz,
- Fig. 8: eine schematische Veranschaulichung des erfindungsgemäß bevorzugten Kernstifts mit Mediumzufuhröffnungen während des Einführens in einen erfindungsgemäß bevorzugten Dichtstopfen mit Drahtgewindeeinsatz,
- Fig. 9: eine schematische Darstellung einer bevorzugten Sequenz des Einformens des Drahtgewindeeinsatzes mit Dichtstopfen in ein Gewebe,
- Fig. 10: eine Ansicht einer bevorzugten Ausführungsform des Dichtstopfens in seiner axialen Richtung von der Seite der Montagehilfe,
- Fig. 11: eine vergrößerte Ansicht einer bevorzugten Ausführungsform eines Teils des Dichtstopfens mit Montagehilfe und
- Fig. 12: ein Flussdiagramm einer bevorzugten Ausführungsform eines Einformverfahrens des Bauteileinsatzes mit Dichtstopfen in ein fließfähiges, aushärtbares Material oder ein mit diesem getränktes Gewebe oder Fasermaterial.

### 5. Detaillierte Beschreibung der bevorzugten Ausführungsform

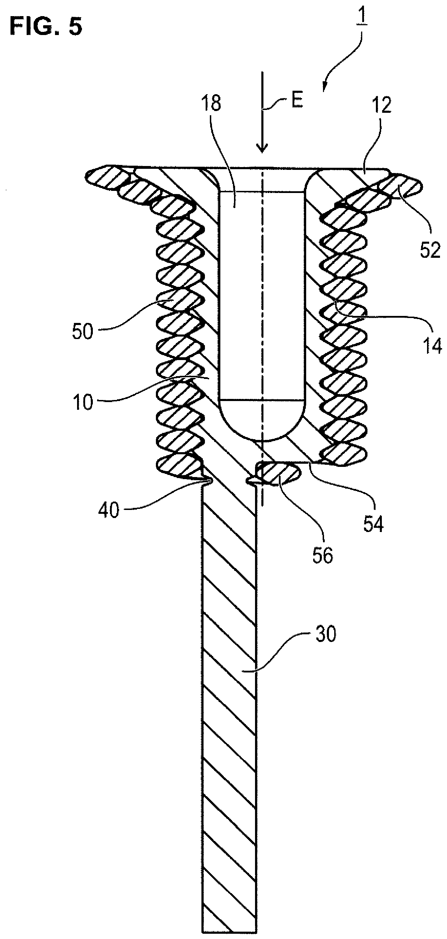

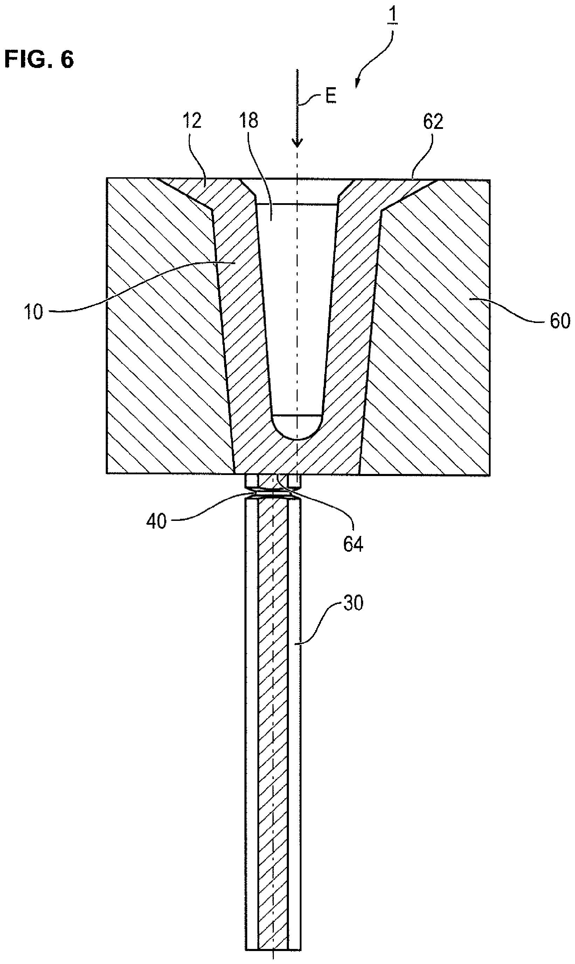

Die Figuren 5 und 6 zeigen bevorzugte Ausführungsformen eines Bauteileinsatzes 50; 60 mit einem Dichtstopfen 1. Diese Anordnung ist angepasst, um in mindestens einem fließfähigen, aushärtbaren Material, wie beispielsweise Kunstharze, Kunststoffe, Metalle, niedrigschmelzende Gusslegierungen, oder in einem Gewebe- oder Fasermaterial, getränkt mit einem derartigen fließfähigen, aushärtbaren Material, angeordnet und befestigt zu werden. Der erfindungsgemäße Dichtstopfen 1 verhindert durch seine Positionierung im Bauteileinsatz 50; 60, dass das fließfähige, aushärtbare Material in das Innere des Bauteileinsatzes 50; 60 eindringt. Dies ist gerade für Bauteileinsätze 50; 60 relevant, die eine Durchgangsbohrung, mindestens eine Mantelöffnung, mindestens einen Seitenwanddurchbruch oder allgemein seitliche oder stirnseitige Öffnungen aufweisen, in die das fließfähige, aushärtbare Material eindringen könnte. Ein Beispiel für einen derartigen Bauteileinsatz ist ein Drahtgewindeeinsatz, wie er am Bezugszeichen 50 gezeigt ist.

Anhand von Fig. 5 ist beispielgebend erkennbar, dass der Drahtgewindeeinsatz 50 zueinander benachbarte, aber nicht unbedingt dichtend aneinander anliegende Windungen aufweist. Platziert man den Drahtgewindeeinsatz 50 in einer Form, um ihn in ein fließfähiges, aushärtbares Material oder ein damit getränktes Gewebe bzw. Fasermaterial einzuformen, dann könnte zwischen den Windungen des Drahtgewindeeinsatzes 50 das fließfähige, aushärtbare Material in das Innere des Drahtgewindeeinsatzes 50 gelangen. Wenn im Inneren des Drahtgewindeeinsatzes 50 das fließfähige Material aushärtet, wird dadurch ein Innengewinde des Drahtgewindeeinsatzes 50 verklebt und unbrauchbar.

Eine bevorzugte Ausführungsform des Drahtgewindeeinsatzes 50 ist in den Figuren 5, 7 und 8 veranschaulicht. Hier sind die Windungen des Drahtgewindeeinsatzes aneinanderliegend gewickelt, so dass sie eine Gewindebuchse bilden. Diese Gewindebuchse ist in den Figuren 5, 7, 8 mit einem Dichtstopfen 10 gezeigt, der unten näher erläutert ist. Trotz der dicht gewickelten Windungen der Gewindebuchse 50 muss die sich durch die Windungen bildende radiale, vorzugsweise zylindrische, Außenwand der Gewindebuchse 50 nicht flüssigkeitsdicht sein. Die Innenwand der Gewindebuchse 50 bildet vorzugsweise ein Normgewinde, so dass ein männliches Gewindeelement ohne weitere Anpassung der Gewindebuchse 50 einschraubbar ist. Zudem gibt die Innenwand der Gewindebuchse 50 beliebige Gewinde in Abstimmung mit einem einzuschraubenden männlichen Gewindeelement (nicht gezeigt) vor.

Im Hinblick auf das oben beschriebene Eindringen fließfähiger, aushärtbarer Materialien in das Innere von Bauteileinsätzen 60 gilt das Gleiche wie für die oben diskutierten Drahtgewindeeinsätze 50. Das fließfähige, aushärtbare Material kann über stirnseitige oder seitliche Öffnungen ins Innere des Bauteileinsatzes 60 eindringen. Zu derartigen Bauteileinsätzen 60 zählen Gewindeeinsätze, Verbindungseinsätze, die ein Schlüsselloch oder eine Struktur für einen Bajonettverschluss oder dergleichen bereitstellen. Ein weiteres Beispiel sind Buchsen für Steckverbindungen elektrischer oder mechanischer Natur. Beispielgebend ist ein derartiger Bauteileinsatz 60 in Fig. 6 gezeigt.

Um nun einen Bauteileinsatz 50; 60 mit stirnseitigen und/oder seitlichen Öffnungen in einem fließfähigen, aushärtbaren Material oder einem damit getränkten Gewebe- bzw. Fasermaterial einformen zu können, wird der Bauteileinsatz 50; 60 mit einem Dichtstopfen 1 verschlossen. Beispielgebend für einen Bauteileinsatz 50; 60 wird vorliegende Erfindung anhand des Drahtgewindeeinsatzes 50 beschrieben. Vorzugsweise besteht der Drahtgewindeeinsatz 50 aus einer Mehrzahl in axialer Richtung übereinander angeordneter Windungen, die nahezu abdichtend oder nicht abdichtend aneinander anliegen. Gemäß einer bevorzugten Ausführungsform vorliegender Erfindung weist der Drahtgewindeeinsatz 50 eine aufgeweitete Einführöffnung 52 auf. In axialer Richtung des Drahtgewindeeinsatzes 50 der Einführöffnung 52 gegenüberliegend, besitzt der Drahtgewindeeinsatz 50 eine weitere stirnseitige Öffnung 54. Da der Drahtgewindeeinsatz 50 einen radial einwärts ragenden Zapfen 56 aufweist, ist die stirnseitige Öffnung 54 außermittig angeordnet. Ohne Zapfen 56 wäre die stirnseitige Öffnung 54 mittig angeordnet. In Bezug auf andere Bauteileinsätze 60 ist es ebenfalls bevorzugt, dass diese ebenfalls eine stirnseitige Öffnung 64 aufweisen, die mittig oder außermittig angeordnet ist.

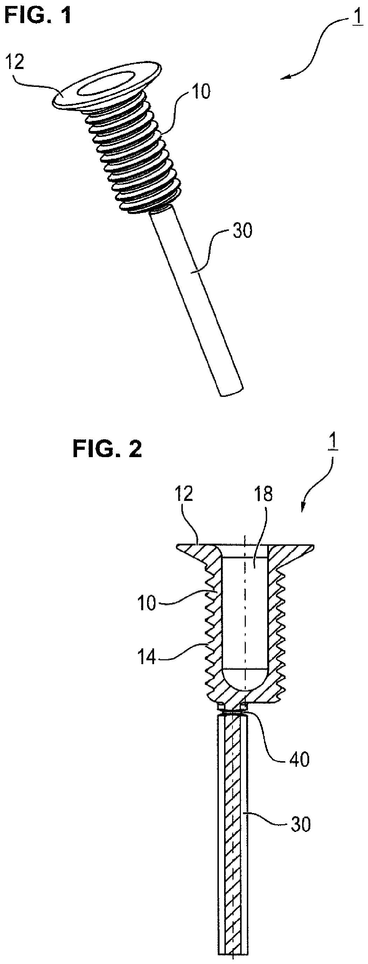

Der bevorzugte Dichtstopfen 1 für den Drahtgewindeeinsatz 50 ist in den Figuren 1 und 2 allein und in Fig. 5 in Kombination mit dem Drahtgewindeeinsatz 50 dargestellt. Der Dichtstopfen 1 besteht aus einem elastischen und gegen mechanische und chemische Angriffe widerstandsfähigen Material, wie beispielsweise elastomere Werkstoffe und Silikone. Weitere bevorzugte Materialien für den Dichtstopfen 10 sind thermoplastisches Gummi, Silikon-Kautschuk, flexibles Hochtemperatur-PVC oder Ethylen-Propylen-Diem-Kautschuk (EPDM).

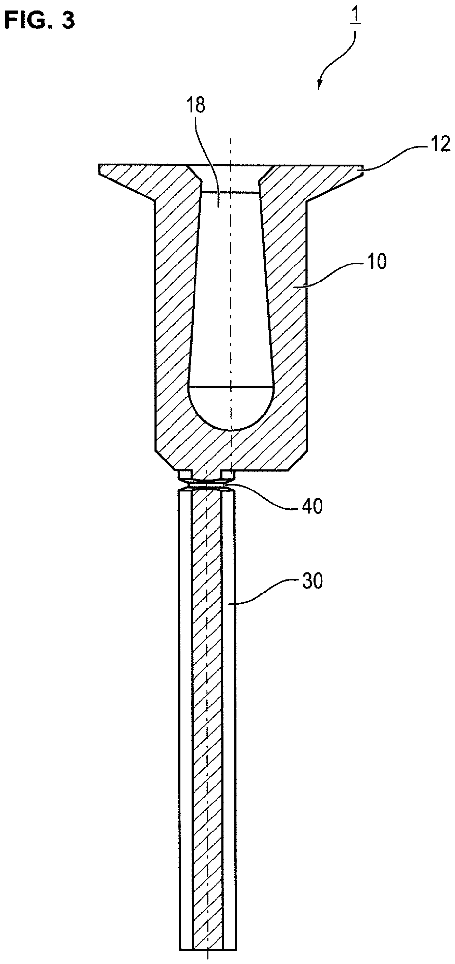

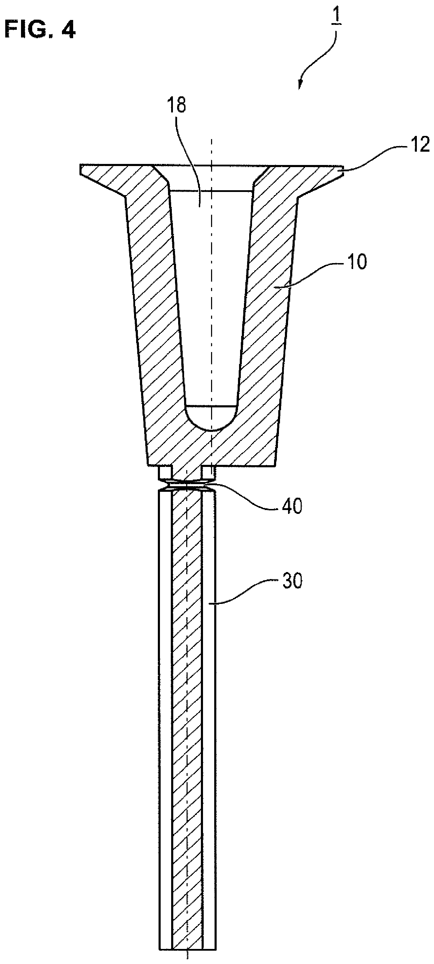

Konstruktiv besteht der Dichtstopfen 1 aus einem Dichtkörper 10 mit optionaler Dichtlippe 12 und einer Montagehilfe 30. Der Dichtkörper 10 ist in seiner Form und Größe an den Bauteileinsatz 50; 60 angepasst. Bezogen auf den Drahtgewindeeinsatz 50 besitzt daher der Dichtkörper 10 vorzugsweise eine zylindrische oder hohlzylindrische Form. In gleicher Weise erfüllen auch konische oder kegelstumpfähnliche Formen des Dichtkörpers 10 die unten näher erläuterte Dichtfunktion. Während die hohlzylindrische Form des Dichtkörpers 10 in Fig. 2 veranschaulicht ist, ist in Figur 3 eine zylindrische Form und in den Figuren 4 und 6 eine bevorzugte konische Form eines Dichtkörpers 10 schematisch dargestellt. Funktionell sind Form und Größe des Dichtkörpers 10 derart ausgelegt, dass sie die innere Öffnung des Bauteileinsatzes 50; 60 ausfüllen und allseitig abdichten. Daher ist der Dichtkörper 10 vorzugsweise mindestens so lang wie der Drahtgewindeeinsatz 50, so dass die innere Öffnung des Drahtgewindeeinsatzes 50 über seine gesamte Länge in radialer Richtung und an den Stirnseiten abdichtbar ist.

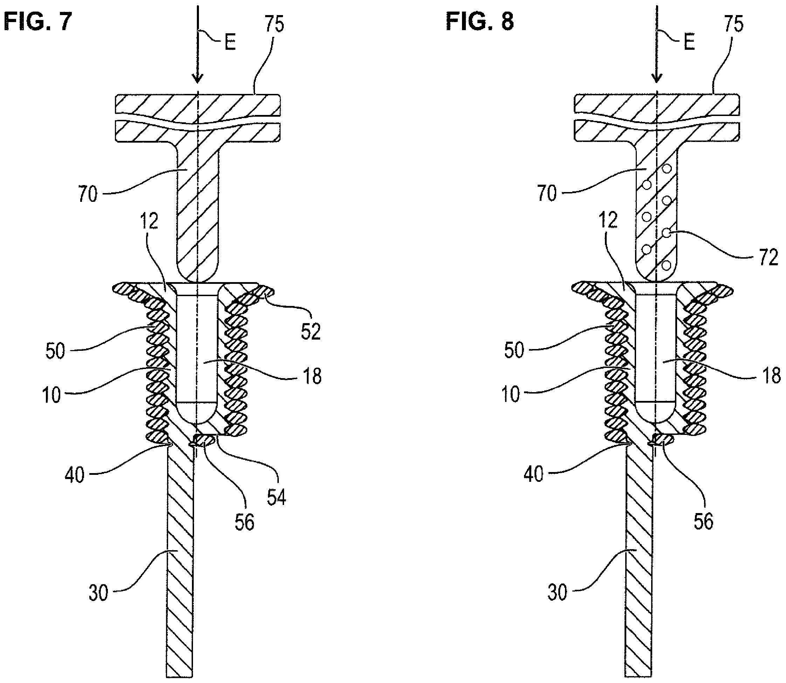

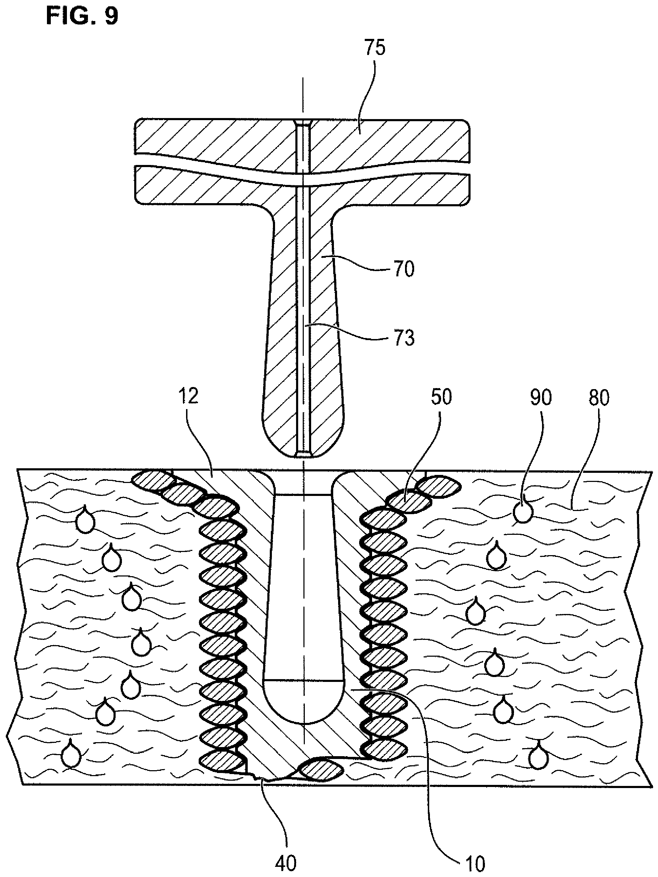

In seinem Durchmesser ist der Dichtkörper 10 bevorzugt größer als der Innendurchmesser der inneren Öffnung des Drahtgewindeeinsatzes 50 ausgebildet, damit sich die radialen Außenwände des Dichtkörpers 10 fest und abdichtend an die radiale Innenwand des Drahtgewindeeinsatzes 5 anlegen. Es ist bevorzugt, den Dichtkörper 10 als Vollkörper (nicht gezeigt) oder mit einer inneren Öffnung 18 auszubilden. Sollte der Dichtkörper 10 die innere Öffnung 18 aufweisen (vgl. Figuren 2 und 7), ist es ebenfalls bevorzugt, den Dichtkörper 10 innerhalb des Drahtgewindeeinsatzes 50 radial aufzuweiten. Dies ist beispielsweise über einen Kernstift und seine spezielle Form oder über das Einblasen eines Mediums (vgl. Fig. 8 und 9), wie Luft, in die Öffnung 18 möglich (siehe unten). Zu diesem Zweck ist der Kernstift 70 ( siehe unten) bezogen auf die Öffnung 18 im Dichtkörper 10 mit einem Übermaß gefertigt, so dass der Dichtkörper 10 radial auswärts gegen die Innenwand des Drahtgewindeeinsatzes 50 oder des Bauteileinsatzes 60 gedrückt wird. Während einerseits der Kernstift 70 durch seine Form bestimmte Verformungen des Dichtstopfens 1 und im speziellen des Dichtkörpers 10 erzeugen kann, ist es ebenfalls bevorzugt, bestimmte Verformungen des Dichtkörpers 10 über eine Form der inneren Öffnung 18 zu erzielen. Daher ist die innere Öffnung 18 vorzugsweise zylindrisch (Fig. 2), tropfenförmig (Fig. 3, 9) oder konisch (Fig. 4, 6) ausgebildet, wobei auch weitere Formgestaltungen bevorzugt sind.

Um das Abdichten durch den Dichtkörper 10 weiter zu unterstützen, ist die äußere Oberfläche des Dichtkörpers 10 bevorzugt strukturiert ausgebildet. Gemäß einer bevorzugten Ausführungsform weist der Dichtkörper 10 ein Außengewinde passend zu dem Gewinde des Drahtgewindeeinsatzes 50 auf. Weiterhin bevorzugt sind eine glatte, radiale Außenwand des Dichtkörpers 10, oder wulstförmige Ausbuchtungen in der radialen Außenwand des Dichtkörpers 10 (hier nicht gezeigt).

Um den Dichtstopfen 1 mit geringem Aufwand in dem Drahtgewindeeinsatz 50 installieren zu können, ist die Montagehilfe 30 vorgesehen. Die Montagehilfe 30 erstreckt sich in axialer Richtung und von der Stirnseite des Dichtstopfens 10 weg, die zuerst in den Bauteileinsatz 50; 60 eingesetzt wird. Da mit der Montagehilfe 30 der Dichtkörper 10 auf einfache Weise in den Drahtgewindeeinsatz 50 gezogen werden kann, ist die Montagehilfe 30 vorzugsweise länger ausgebildet als der Drahtgewindeeinsatz 50. Dadurch lässt sich die Montagehilfe 30 leicht durch den Drahtgewindeeinsatz 50 hindurch stecken, um dann den Dichtkörper 10 über das vorstehende Ende der Montagehilfe 30 in den Drahtgewindeeinsatz 50 ziehen zu können.

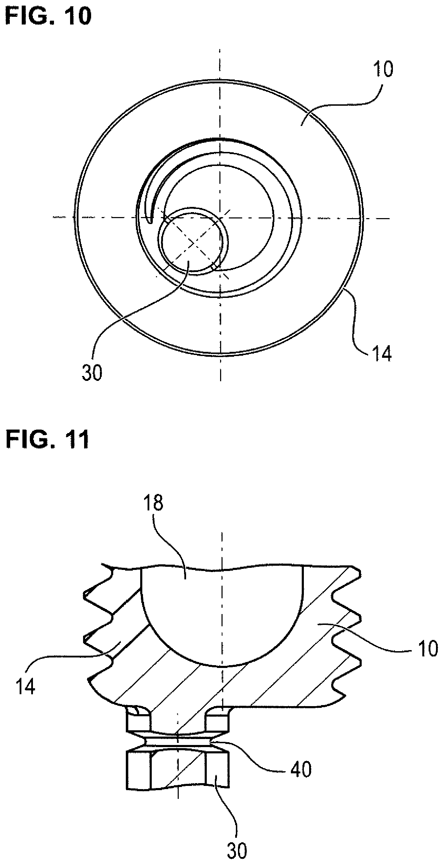

In Abhängigkeit von der stirnseitigen Öffnung 54; 64 des Bauteileinsatzes 50; 60 ist die Montagehilfe 30 mittig oder außermittig (vgl. Fig. 10) bezogen auf die Symmetrieachse des Dichtkörpers 10 angeordnet. Da der Drahtgewindeeinsatz 50 bevorzugt einen mittigen Zapfen 56 aufweist, ist die Montagehilfe 30 außermittig angeordnet. Die mittige wie auch die außermittige Anordnung der Montagehilfe 30 unterstützen in gleicher Weise die Montage des Dichtstopfens 1 im Bauteileinsatz 50; 60.

Bevor oder nachdem der mit dem Dichtstopfen 1 abgedichtete Bauteileinsatz 50; 60 in einer Form oder anderweitig positioniert ist, um eingeformt zu werden, wird die Montagehilfe 30 entfernt. Andernfalls könnte die Montagehilfe 30 den Einformprozess behindern, Bauteilmängel hervorrufen oder unästhetisch die Bauteilform verändern. Falls es die Konstruktion des herzustellenden Bauteils zulassen sollte, ist es ebenfalls bevorzugt, die Montagehilfe 30 im Bauteil zu belassen.

Zum Entfernen der Montagehilfe 30 weist die Montagehilfe 30 vorzugsweise eine Verjüngung 40, im Speziellen eine Sollbruchstelle, auf, über die sie vom Dichtkörper 10 entfernbar ist. Dies ist im Speziellen in Fig. 11 veranschaulicht, die den eingekreisten Bereich aus Fig. 2 vergrößert wiedergibt. Die Verjüngung 40 ist vorzugsweise radial umlaufend oder nur teilweise umlaufend oder als radialer Einschnitt in der Montagehilfe 30 ausgebildet. Die Verjüngung 40 bildet eine vordefinierte Versagensstelle, an der die Montagehilfe 30 vom Dichtkörper 10 entfernbar ist, ohne dass der Dichtkörper 10 seine Dichtfunktion im Bauteil 50; 60 verliert.

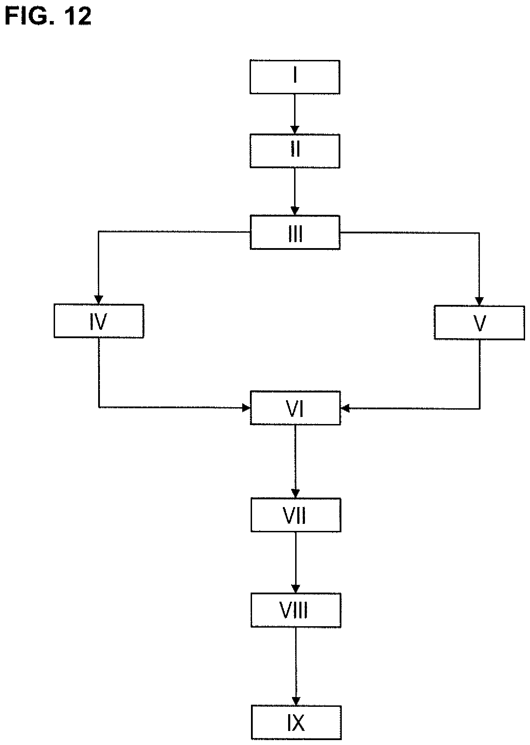

Bei der Herstellung von Bauteilen werden fließfähige, aushärtbare Werkstoffe eingesetzt, wie beispielsweise Harzsysteme, wie sie oben genannt worden sind. Gemäß einer bevorzugten Ausführungsform werden diese Werkstoffe heiß verarbeitet und härten während des Abkühlens aus. Andere fließfähige Werkstoffe werden kalt verarbeitet und nachfolgend über Wärmezufuhr ausgehärtet. Beispielsweise wird ein bevorzugtes kaltes Harzsystem, vorzugsweise aus Epoxidharz, Melaminharz, Polyesterharz oder Silikonharz, zum Tränken von Kohlefasern, Geweben, Matten, Non-woven-Materialien eingesetzt und durch Wärmezufuhr ausgehärtet. Ähnliche Verfahren dienen der Verarbeitung zu Gießmassen, Pressmassen, Laminaten und Hohlraum-Füllmassen. Wird ein Bauteileinsatz 50; 60 mit Dichtstopfen 1 in eine derartige Materialkombination eingeformt, muss das Innere des Bauteileinsatzes 50; 60 gegen die niedrig viskose Fließfront des kalten Harzsystems abgedichtet werden. Unter Bezugnahme auf das Flussdiagramm in Fig. 12 wird ein bevorzugtes Herstellungsverfahren eines Bauteils mit Hilfe des Bauteileinsatzes 50; 60 mit Dichtstopfen 1 beschrieben. Zunächst wird im Schritt I der Bauteileinsatz 50; 60 mit dem Dichtstopfen 1 verschlossen. Dazu wird die Montagehilfe 30 in Einsetzrichtung E in den Bauteileinsatz 50; 60 eingeführt, bis die Montagehilfe 30, vorzugsweise am stirnseitigen Ende, aus der Öffnung 54; 64 hervorragt. Mit Hilfe des vorstehenden Endes der Montagehilfe 30 wird der Dichtkörper 10 in den Bauteileinsatz 50; 60 gezogen.

Sobald der Dichtstopfen 1 passend im Bauteileinsatz 50; 60 positioniert ist, wird die Montagehilfe 30 vom Dichtkörper 10 entfernt (Schritt II).

Ist der Dichtkörper 10 ein Vollkörper (vgl. Figuren 2 und 4), wird der Bauteileinsatz 50; 60 durch geeignete Positionierhilfen im Werkzeug oder in Formhälften positioniert und gehalten. Bei einem hohlzylindrischen oder hohlzylinderähnlichen oder anders geformten Dichtkörper 10 mit innerer Öffnung 18 (vgl. Figuren 7, 8, 9) wird der Dichtstopfen 1 mit Bauteileinsatz 50; 60 auf einem Kernstift 70 innerhalb einer Werkzeughälfte oder -form positioniert (Schritt III). Es ist ebenfalls bevorzugt, den Bauteileinsatz 50; 60 zunächst im Werkzeug oder einer Formhälfte zu positionieren und erst danach den Dichtstopfen 1 in den Bauteileinsatz 50; 60 einzusetzen.Gemäß bevorzugter Ausführungsformen vorliegender Erfindung wird der Dichtkörper 10 durch die Geometrie des Kernstifts (Schritt IV) oder durch Einleitung eines Mediums in den Dichtkörper 10 aufgeweitet (Schritt V). Dadurch erfolgt die Abdichtung des Bauteileinsatzes 50; 60 mittels Dichtkörper 10 nach außen. Beispielgebend veranschaulicht Fig. 7 den Kernstift 70 ohne Öffnungen, Fig. 8 den Kernstift 70 mit radialen Öffnungen 72 und Fig. 9 den Kernstift 70 mit einer axialen Öffnung 73. Über die Öffnungen 72, 73 wird vorzugsweise Luft oder ein anderes Medium in den Dichtkörper 10 eingeleitet, um ihn aufzuweiten, vorzugsweise radial aufzuweiten. Bezogen auf Fig. 9 wird zunächst der Kernstift 70 in den Dichtkörper 10 eingesetzt und dichtet dadurch die Öffnung 18 durch seinen radial aufgeweiteten Kopf 75 ab. Sobald ein Medium in die Öffnung 18 eingeleitet wird, kann dieses die Öffnung 18 nicht verlassen und führt zur Aufweitung des Dichtkörpers 10.

Danach werden im Schritt VI Gewebe, Fasern, Matten oder dergleichen in das Werkzeug eingelegt und über bzw. seitlich von dem Bauteileinsatz 50; 60 mit Dichtstopfen 1 geschichtet (Schritt VI). Hierfür gibt es unterschiedliche Möglichkeiten, die je nach Anwendungsfall jeweils alle gleichermaßen bevorzugt sind. Beispielsweise werden die Gewebe durch Dorne aufgeweitet, um dann in den aufgeweiteten Abschnitten den Bauteileinsatz 50; 60 mit Dichtstopfen zu positionieren. Gemäß einer weiteren bevorzugten Ausführungsform weitet der Gewindeeinsatz 50; 60 mit Dichtstopfen 1 selbst die später mit aushärtbarem, fließfähigem Material zu tränkenden Gewebe auf. Eine weitere Ausführungsform besteht darin, die Gewebelagen einzuschneiden und nachfolgend in den eingeschnittenen Abschnitten den Bauteileinsatz 50; 60 mit Dichtstopfen 1 zu positionieren. Es ist des Weiteren erfindungsgemäß bevorzugt, in den zu tränkenden Lagen Bohrungen vorzusehen, in denen der Bauteileinsatz 50; 60 mit Dichtstopfen 1 positioniert wird. Gemäß einer weiteren bevorzugten Ausführungsform werden Gewebelagen über den Bauteileinsatz 50; 60 mit Dichtstopfen 1 gelegt, so weit diese Gewebelagen Öffnungen zum Aufnehmen des Bauteileinsatzes 50; 60 mit Dichtstopfen 1 aufweisen.

Im darauffolgenden Schritt VII wird das Werkzeug mit darin positionierten Bauteileinsätzen 50; 60 mit Dichtstopfen 1 sowie zu tränkendem Material geschlossen. Gemäß einer bevorzugten Ausführungsform wird nun das kalte Harzsystem in das Werkzeug eingebracht, um das darin befindliche Gewebe zu tränken. Gemäß einer weiteren bevorzugten Ausführungsform wird ein heißes Harzsystem in das Werkzeug eingebracht, um das darin befindliche Material zu tränken.

Bei der Verwendung eines kalten Harzsystems wird nun das vorab getränkte Gewebe unter Druck und Temperatur ausgehärtet. Dabei bleiben diese Dichtstopfen 1 innerhalb der im Werkzeug angeordneten Bauteileinsätze 50; 60, da sie aufgrund ihres Materials eine ausreichende Temperaturbeständigkeit aufweisen. Bei der Verwendung eines heißen Harzsystems wird nach Tränken des Materials innerhalb des Werkzeugs dieses abgekühlt, so dass das heiße Harzsystem aushärtet (Schritt VIII).

Nach Beendigung des Aushärteprozesses in Schritt VIII werden die Bauteile aus dem Werkzeug oder den Formhälften entformt. Die Dichtstopfen 1 werden aufgrund ihres elastischen Materials mit geringem Aufwand aus dem befestigten Bauteileinsatz 50; 60 entfernt, so dass nun ein verschleißfreies und sauberes Gewinde ohne Harzreste innerhalb des ausgeformten Bauteils vorliegt (Schritt IX).

Fig. 9 veranschaulicht schematisch einen Drahtgewindeeinsatz 50 mit Dichtstopfen 1, von dem die Montagehilfe 30 bereits entfernt worden ist. Da der Dichtkörper 10 hohlzylinderförmig ausgebildet ist, kann der Dichtstopfen 1 mit Drahtgewindeeinsatz 50 auf dem Kernstift 70 im Werkzeug positioniert werden. Der Kernstift 70 weitet den Dichtkörper 10 auf und dichtet dadurch den Drahtgewindeeinsatz 50 ab. Die Dichtlippe 12 dichtet den Drahtgewindeeinsatz 50 in axialer Richtung gegen den Kernstift 70 ab.

Danach wird das Gewebe/die Fasern im Werkzeug bzw. den Formhälften eingelegt, wobei das Gewebe bzw. die Fasern mit dem Bezugszeichen 80 gekennzeichnet sind. Nachfolgend wird das Gewebe bzw. werden die Fasern 80 mit dem aushärtbaren, flüssigen Material 90, vorzugsweise Harz, getränkt. Zum Aushärten des Harzes wird je nach System das Harz abgekühlt oder mit Wärme beaufschlagt (siehe oben).

Zum Ausformen des Werkstücks wird zunächst der Kernstift 70 aus dem Dichtkörper 10 entfernt. Nachfolgend kann das Bauteil aus der Werkzeughälfte entnommen werden und der Dichtkörper 10 kann aus dem Drahtgewindeeinsatz 50 entfernt werden.

## Patentansprüche

1. Bauteileinsatz (50) mit einem Dichtstopfen, wobei der Bauteileinsatz (50) ein Drahtgewindeeinsatz (50) oder ein Gewindeeinsatz mit Durchgangsbohrung und/oder durchbrochenen Seitenwänden und/oder Mantelöffnungen ist und der in mindestens ein fließfähiges aushärtbares Material oder in ein mit diesem getränktes Fasermaterial einformbar ist, sodass eine Innenseite des Bauteileinsatzes (50) von dem Material freihaltbar ist, wobei der Dichtstopfen (1) folgende Merkmale aufweist:
a. einen zylinderähnlichen, insbesondere zylindrischen oder hohlzylindrischen, konischen oder kegelstumpfähnlichen Dichtkörper (10) mit einer radialen Außenseite, die an die Innenseite des Bauteileinsatzes (50) anpassbar oder angepasst ist, wobei
b. der Dichtstopfen (1) mindestens eine entfernbare Montagehilfe (30) an einem geschlossenen Ende des Dichtkörpers (10) aufweist, sodass der Dichtstopfen (1) mit vorauseilender Montagehilfe (30) in den Bauteileinsatz (50) einsetzbar ist.

2. Bauteileinsatz (50) mit Dichtstopfen (1) gemäß Anspruch 1, dessen Dichtkörper (10) an dem der Montagehilfe (30) abgewandten Ende eine radial umlaufende Dichtlippe (12) und/oder eine stirnseitige Dichtfläche aufweist.

3. Bauteileinsatz (50) mit Dichtstopfen (1) gemäß einem der vorhergehenden Ansprüche, dessen Montagehilfe (30) die Form eines steg- oder zapfenförmigen Fortsatzes aufweist, der sich in axialer Richtung des Dichtkörpers (10) erstreckt und bezogen auf die Symmetrieachse des Dichtkörpers (10) außermittig angeordnet ist.

4. Bauteileinsatz (50) mit Dichtstopfen (1) gemäß einem der vorhergehenden Ansprüche, dessen Montagehilfe (30) eine Verjüngung (40) benachbart zum Dichtkörper (10) aufweist, sodass die Montagehilfe (30) vom Dichtkörper (10) entfernbar ist.

5. Bauteileinsatz (50) mit Dichtstopfen (1) gemäß einem der vorhergehenden Ansprüche, dessen Dichtkörper (10) eine hohlzylindrische Form aufweist, in der eine innere Öffnung (18) an einen Kernstift (70) einer Form angepasst ist, sodass der hohlzylindrische Dichtkörper (10) über den Kernstift (70) in der inneren Öffnung (18) radial aufweitbar ist.

6. Bauteileinsatz (50) mit Dichtstopfen (1) gemäß einem der vorhergehenden Ansprüche, wobei der Dichtkörper (10) in seiner axialen Richtung mindestens so lang ist wie der Bauteileinsatz (50).

7. Bauteileinsatz (50) mit Dichtstopfen (1) gemäß einem der vorhergehenden Ansprüche, in dem die radiale Außenseite des Dichtkörpers (10) elastisch an das Innengewinde des Drahtgewindeeinsatzes (50) oder des Gewindeeinsatzes anpassbar ist oder die radiale Außenseite des Dichtkörpers (10) eine strukturierte Form umfasst, die an das Innengewinde des Bauteileinsatzes (50) angepasst ist.

8. Bauteileinsatz (50) mit einem Dichtstopfen (1) gemäß einem der vorhergehenden Ansprüche, wobei der Dichtkörper (10) nur eine Montagehilfe (30) aufweist oder wobei der Dichtkörper (10) eine erste Montagehilfe (30) und eine zweite Montagehilfe aufweist, die sich in axialer Richtung gegenüberliegend zur ersten Montagehilfe (30) vom Dichtkörper (10) erstreckt.

9. Verfahren zum Einformen eines Bauteileinsatzes (50) in mindestens ein fließfähiges aushärtbares Material oder in ein mit diesem getränktes Fasermaterial, wobei der Bauteileinsatz (50) ein Drahtgewindeeinsatz (50) oder ein Gewindeeinsatz mit Durchgangsbohrung und/oder durchbrochenen Seitenwänden und/oder Mantelöffnungen ist, während das Verfahren die folgenden Schritte aufweist:
a. Verschließen des Bauteileinsatzes (50) mit einem Dichtstopfen (1) bestehend aus einem zylinderähnlichen, insbesondere zylindrischen oder hohlzylindrischen, konischen oder kegelstumpfähnlichen Dichtkörper (10) mit einer radialen Außenseite, die an die Innenseite des Bauteileinsatzes (50) anpassbar oder angepasst ist, und mindestens einer entfernbaren Montagehilfe (30) an einem geschlossenen Ende des Dichtkörpers (10) durch Einsetzen des Dichtkörpers (10) mit vorauseilender Montagehilfe (30) in den Bauteileinsatz (50),
b. Halten des verschlossenen Bauteileinsatzes (50) mit Dichtstopfen (1) an einer vorbestimmten Stelle,
c. zumindest teilweise Umgeben des Bauteileinsatzes (50) mit Dichtstopfen (1) mit dem fließfähigen aushärtbaren Material oder mit einem mit diesem getränkten Fasermaterial und Aushärten des Materials, und
d. Entfernen des Dichtstopfens (1) aus dem Bauteileinsatz (50).

10. Verfahren gemäß Anspruch 9, das den weiteren Schritt aufweist:
Positionieren des Bauteileinsatzes (50) mit oder ohne Dichtstopfen (1) an der vorbestimmten Stelle.

11. Verfahren gemäß Anspruch 9 oder 10, das den weiteren Schritt aufweist:
Entfernen der Montagehilfe (30) vom Dichtkörper (10), nachdem der Dichtstopfen (1) im Bauteileinsatz (50) eingesetzt worden ist.

12. Verfahren gemäß einem der Ansprüche 9 bis 11, bei dem der Dichtstopfen (1) einen innen hohl ausgebildeten Dichtkörper (10) aufweist, sodass der Dichtstopfen (1) mit Bauteileinsatz (50) auf einem Kernstift (70) positionierbar und haltbar ist.

13. Verfahren gemäß Anspruch 12, das den weiteren Schritt aufweist:
Aufweiten des Dichtkörpers (10) des Dichtstopfens (1) mit Hilfe einer Form des Kernstifts (70) und/oder mit Hilfe eines durch den Kernstift (70) abgebbaren Druckmittels, vorzugsweise Luft.

## Claims

1. Component insert (50) with a sealing plug, wherein the component insert (50) is a wire thread insert (50) or a thread insert with passage bore and/or open-worked side walls and/or shell openings and which is mouldable into at least a flowable, curable material or into a fibrous material soaked therewith so that an inner side of the component insert (50) is keepable free of the material, wherein the sealing plug (1) comprises the following features:
a. a cylinder-like, particularly a cylindrical or hollow-cylindrical, conical or truncated cone-like sealing body (10) having a radial outer side which is adaptable or adapted to the inner side of the component insert (50), wherein
b. the sealing plug (1) comprises at least one removable mounting aid (30) at a closed end of the sealing body (10), so that the sealing plug (1) is insertable into the component insert (50) with the mounting aid (30) first.

2. Component insert (50) with sealing plug (1) according to claim 1, the sealing body (10) of which comprises a radially circumferential sealing lip (12) and/or a front-end sealing surface at the end facing away from the mounting aid (30).

3. Component insert (50) with sealing plug (1) according to one of the preceding claims, the mounting aid (30) of which has the form of a web-like or cone-shaped extension which extends in the axial direction of the sealing body (10) and is arranged eccentrically with respect to the axis of symmetry of the sealing body (10).

4. Component insert (50) with sealing plug (1) according to one of the preceding claims, the mounting aid (30) of which has a tapering (40) adjacent to the sealing body (10), so that the mounting aid (30) is removable from the sealing body (10).

5. Component insert (50) with sealing plug (1) according to one of the preceding claims, the sealing body (10) of which has a hollow cylindrical shape in which an inner opening (18) is adapted to a core pin (70) of a kind, so that the hollow cylindrical sealing body (10) is radially expandable via the core pin (70) in the inner opening (18).

6. Component insert (50) with sealing plug (1) according to one of the preceding claims, wherein in its axial direction, the sealing body (10) is at least as long as the component insert (50).

7. Component insert (50) with sealing plug (1) according to one of the preceding claims, in which the radial outer side of the sealing body (10) is elastically adaptable to the internal thread of the wire thread insert (50) or of the thread insert, or the radial outer side of the sealing body (10) comprises a structured shape which is adapted to the internal thread of the component insert (50).

8. Component insert (50) with a sealing plug (1) according to one of the preceding claims, wherein the sealing body (10) has one mounting aid (30), only, or wherein the sealing body (10) has a first mounting aid (30) and a second mounting aid extending in the axial direction from the sealing body (10) opposite to the first mounting aid (30).

9. Method for moulding a component insert (50) into at least a flowable, curable material or into a fibrous material soaked therewith, wherein the component insert (50) is a wire thread insert (50) or a thread insert with passage bore and/or open-worked side walls and/or shell openings, wherein the method comprises the following steps:
a. closing the component insert (50) with a sealing plug (1) consisting of a cylinder-like, particularly a cylindrical or hollow-cylindrical, conical or truncated cone-like sealing body (10) having a radial outer side which is adaptable or adapted to the inner side of the component insert (50), and at least one removable mounting aid (30) at a closed end of the sealing body (10) by inserting the sealing body (10) with the mounting aid (30) first into the component insert (50),
b. holding the closed component insert (50) with sealing plug (1) at a predetermined position,
c. at least partially surrounding said component insert (50) with sealing plug (1) with the flowable, curable material or with a fibrous material soaked therewith and curing of the material, and
d. removing the sealing plug (1) from the component insert (50).

10. The method according to claim 9, comprising the further step of:
positioning the component insert (50) with or without sealing plug (1) at the predetermined position.

11. The method according to claim 9 or 10, comprising the further step of:
removing the mounting aid (30) from the sealing body (10) after the sealing plug (1) has been inserted into the component insert (50).

12. The method according to one of the claims 9 to 11, wherein the sealing plug (1) has an inner hollow formed sealing body (10), so that the sealing plug (1) with component insert (50) is positionable and holdable on a core pin (70).

13. The method according to claim 12, comprising the further step of:
expanding the sealing body (10) of the sealing plug (1) with the help of a shape of the core pin (70) and/or with the help of a pressure means, preferably air, deliverable through the core pin (70).

## Revendications

1. Insert de composant (50) avec bouchon d'étanchéité, dans lequel l'insert de composant (50) est un insert fileté filaire (50) ou un insert fileté avec un alésage de passage et/ou des parois latérales percées et/ou des ouvertures d'enveloppe, lequel peut être moulé dans au moins un matériau durcissable coulant ou dans un matériau fibreux imprégné avec celui-ci, de telle façon qu'un côté intérieur de l'insert de composant (50) peut être exempt de matériau, le bouchon d'étanchéité (1) présentant les caractéristiques suivantes :
a. un corps d'étanchéité (10) semblable à un cylindre, en particulier cylindrique ou cylindrique creux, conique ou semblable à un cône tronqué, avec un côté extérieur radial adapté ou susceptible d'être adapté au côté intérieur de l'insert de composant (50), dans lequel
b. le bouchon d'étanchéité (1) présente au moins un auxiliaire de montage (30) amovible à une extrémité fermée du corps d'étanchéité (10), de sorte que le bouchon d'étanchéité (1) peut être inséré dans l'insert de composant (50) avec l'auxiliaire de montage (30) à l'avant.

2. Insert de composant (50) avec bouchon d'étanchéité (1) selon la revendication 1, dont le corps d'étanchéité (10) présente une lèvre d'étanchéité (12) périphérique radiale et/ou une surface d'étanchéité frontale à l'extrémité opposée à l'auxiliaire de montage (30).

3. Insert de composant (50) avec bouchon d'étanchéité (1) selon l'une des revendications précédentes, dont l'auxiliaire de montage (30) présente la forme d'une saillie en forme de nervure ou de téton s'étendant dans la direction axiale du corps d'étanchéité (10) et disposée de façon excentrée par rapport à l'axe de symétrie du corps d'étanchéité (10).

4. Insert de composant (50) avec bouchon d'étanchéité (1) selon l'une des revendications précédentes, dont l'auxiliaire de montage (30) présente un rétrécissement (40) adjacent au corps d'étanchéité (10), de sorte que l'auxiliaire de montage (30) peut être retiré du corps d'étanchéité (10).

5. Insert de composant (50) avec bouchon d'étanchéité (1) selon l'une des revendications précédentes, dont le corps d'étanchéité (10) présente une forme cylindrique creuse, dans laquelle une ouverture intérieure (18) est adaptée à une forme de la tige de noyau (70), de sorte que le corps d'étanchéité (10) cylindrique creux peut être élargi radialement dans l'ouverture intérieure (18) par le biais de la tige de noyau (70).

6. Insert de composant (50) avec bouchon d'étanchéité (1) selon l'une des revendications précédentes, dans lequel le corps d'étanchéité (10) est au moins aussi long que l'insert de composant (50) dans sa direction axiale.

7. Insert de composant (50) avec bouchon d'étanchéité (1) selon l'une des revendications précédentes, dans lequel le côté extérieur radial du corps d'étanchéité (10) peut être adapté élastiquement au filetage intérieur de l'insert fileté filaire (50) ou de l'insert fileté ou dans lequel le côté extérieur radial du corps d'étanchéité (10) comporte une forme structurée adaptée au filetage intérieur de l'insert de composant (50).

8. Insert de composant (50) avec bouchon d'étanchéité (1) selon l'une des revendications précédentes, dans lequel le corps d'étanchéité (10) présente uniquement un auxiliaire de montage (30) ou dans lequel le corps d'étanchéité (10) présente un premier auxiliaire de montage (30) et un deuxième auxiliaire de montage, lequel s'étend de façon opposée au premier auxiliaire de montage (30) à partir du corps d'étanchéité (10) dans la direction axiale.

9. Procédé de moulage d'un insert de composant (50) dans au moins un matériau durcissable coulant ou dans un matériau fibreux imprégné avec celui-ci, dans lequel l'insert de composant (50) est un insert fileté filaire (50) ou un insert fileté avec un alésage de passage et/ou des parois latérales percées et/ou des ouvertures d'enveloppe, le procédé présentant les étapes suivantes :
a. fermeture de l'insert de composant (50) avec un bouchon d'étanchéité (1) constitué d'un corps d'étanchéité (10) semblable à un cylindre, en particulier cylindrique ou cylindrique creux, conique ou semblable à un cône tronqué, avec un côté extérieur radial adapté ou susceptible d'être adapté au côté intérieur de l'insert de composant (50), et au moins un auxiliaire de montage (30) amovible à une extrémité fermée du corps d'étanchéité (10), par insertion du corps d'étanchéité (10) dans l'insert de composant (50) avec l'auxiliaire de montage (30) à l'avant,
b. maintien de l'insert de composant (50) fermé avec bouchon d'étanchéité (1) à un endroit prédéterminé,
c. enrobage au moins partiel de l'insert de composant (50) avec bouchon d'étanchéité (1) avec le matériau durcissable coulant ou avec un matériau fibreux imprégné avec celui-ci, et durcissement du matériau, et
d. retrait du bouchon d'étanchéité (1) par rapport à l'insert de composant (50).

10. Procédé selon la revendication 9, présentant l'étape supplémentaire suivante :
- positionnement de l'insert de composant (50) avec ou sans bouchon d'étanchéité (1) à l'endroit prédéterminé.

11. Procédé selon la revendication 9 ou 10, présentant l'étape supplémentaire suivante :
- retrait de l'auxiliaire de montage (30) par rapport au corps d'étanchéité (10), après l'insertion du bouchon d'étanchéité (1) dans l'insert de composant (50).

12. Procédé selon l'une des revendications 9 à 11, dans lequel le bouchon d'étanchéité (1) présente un corps d'étanchéité (10) conçu creux à l'intérieur, de sorte que le bouchon d'étanchéité (1) peut être positionné et maintenu sur une tige de noyau (70) avec l'insert de composant (50).

13. Procédé selon la revendication 12, présentant l'étape supplémentaire suivante :
- élargissement du corps d'étanchéité (10) du bouchon d'étanchéité (1) à l'aide d'une forme de la tige de noyau (70) et/ou à l'aide d'un moyen de pression susceptible d'être fourni par la tige de noyau (70), de préférence de l'air.
